# EUROPEAN PATENT APPLICATION

(11) **EP 1 946 904 A1**
(43) Date of publication of application: **23.07.2008**
(21) Application number: 07023821.7
(22) Date of filing: 10.12.2007
(51) Int. Cl.: B29C 45/38, B29C 45/27

(54) **Sprue-cutting accessory for injection moulds**

(30) Priority: 19.01.2007 ES 200700162
(71) Applicant: CUMSA-COMMERCIAL DE UTILES Y MOLDES, S.A., 08960 Sant Just Desvern Barcelona (ES)
(72) Inventor: Pruna, Alberto Navarra, 08960 Sant Just Desvern Barcelona (ES)
(74) Representative: PROPI, S.L.

(57) **Abstract**

Inside a base element (3) that is designed to be attached to one of the two parts of the mould, specifically to the part in which the material inlet to the corresponding cavity (7) is situated, a cylindrical insert (1) is in turn situated, mounted with the freedom to rotate in the corresponding housing (2), which is also cylindrical, the material inlet (5) being established in the base (4) of said insert (1) next to the moulding cavity (7), which leads with a curved path and a progressively decreasing section to the access (6) to the moulding cavity (7), which is also situated in correspondence with said base (4). Thus, at the end of the injection stage of each piece, an angular rotation of the cylindrical insert (1) makes the edge of the material outlet (6), which takes the form of a sharp edge, cause the cut that shears the injection branch, thus achieving a perfect finish of the surface of the piece and preventing the usual formation of protuberances, draws and other irregularities that have a negative effect on the appearance and/or safety of the plastic piece.

## Description

### OBJECT OF THE INVENTION

The present invention relates to an accessory for injection moulds, specifically for pieces made from a plastic material, said accessory having a dual function, on the one hand acting as an inlet for the material to the moulding cavity, and on the other hand acting as a means of cutting the sprue material that remains attached to the piece at the end of the moulding stage thereof.

The object of the invention is to remove said residual sprue by cutting or shearing, in order to achieve a perfect finish of the surface of the piece, carrying out said cutting operation before the piece is ejected and after the mould is opened, to release the corresponding injection branch.

The invention therefore lies within the field of mould manufacturing for plastic injection.

### BACKGROUND OF THE INVENTION

As is known, a plastic injection mould takes the form of two pieces or semi-moulds, one fixed and the other moveable, which interconnect when closed to form a cavity of the same shape and size as the plastic piece to be produced. Said cavity has at least one melted material inlet for the filling thereof, and once said filling process is completed the injected piece can be removed from its cavity with the aid of ejectors that are activated after the mould is opened.

Often, in the case of small or relatively small pieces, moulds with multiple cavities are manufactured, wherein a plurality of injection branches are established from a single material feed point, which lead to each of the cavities of the respective pieces to be produced.

In any case, once the plastic material injection stage is completed, specifically during the de-moulding stage, the material constituting the injection branch or group of injection branches must be physically separated from the material constituting the moulded piece or pieces, this separation being performed by means of a traction force, resulting in the tearing of the material, which can have two negative effects: Part of the material of the injection branch remains attached to the piece, forming a protuberance thereon that must be removed to achieve a perfect finish of said piece, or a depression forms in said area, due to the injection branch pulling away part of the material of the piece, which is much more difficult to resolve.

In the case of thin pieces, the material inlet is often on one of its faces, so as not to have a negative effect on its edges, and in this type of pieces it is common for draws to occur on the opposite face to the material inlet when the injection branch comes away from the injected piece, which also has a very negative effect on the general appearance of said piece.

In cases where the piece requires a high degree of finish or the material inlet must be completely removed, a subsequent operation is necessary, which is logically detrimental to the cost of the piece.

### DESCRIPTION OF THE INVENTION

The accessory proposed herein provides a fully satisfactory solution to the aforementioned problems, making it possible to achieve a perfect finish of each piece at the end of the moulding stage thereof by cutting the plastic material through the plane that connects the corresponding end of the injection branch and the surface of the moulded piece that has been produced.

To achieve this, and more specifically, the invention establishes the material inlet through a cylindrical insert mounted with the freedom to rotate in a base element that is solidly joined to the corresponding part of the mould, preferably to the moveable part, with the particularity that the material inlet through the cylinder forms sharp edges that act as a blade, said insert rotating on its own centre in relation to the part of the mould to which the base element containing the cylindrical insert is solidly joined, this rotating movement thereby bringing about a cut that shears the material in exact correspondence with the outer surface of the plastic piece that has been produced, which provides a perfect finish thereof.

To achieve this cutting effect of the blade, i.e. the rotation of the cylindrical insert, it must rotate by just a few degrees, and said angular movement may be supplied by any auxiliary mechanism, but it is preferably automatic caused by the effect of the opening manoeuvre or separation between the two parts that constitute the mould, as will be seen below.

According to the above, the cylindrical insert is housed inside the base element with the aid of a support to which it is secured by means of a bolt, which makes it possible to dismantle said insert for the periodic sharpening thereof, or for its replacement if necessary, a bearing being established between said support and the base element, which aids the rotation of the insert.

According to said automatic manoeuvre that actuates the blade or cylindrical insert, the support of said insert includes an off-centred pin on which a transversal slide acts, which is responsible for supplying the necessary angular movement thereto for the cutting manoeuvre, said slide in turn being actuated by a cam situated in a lateral housing of the base element that is appreciably parallel to the housing that receives the cylindrical insert, said cam being immovably connected to a shaft that emerges from the base element and enables it to be secured to the other part of the mould, specifically the fixed part, so that during the opening manoeuvre of the mould and thanks to a first inoperative straight section of said cam, the blade or cylindrical insert remains static, i.e. inoperative, while the mould is opened, specifically until the injection branch is completely released, at which point a slope formed on said cam determines the movement of the slide and the consequent rotating movement of the blade or cylindrical insert to cut the injection branch in optimum conditions.

Said cam forms part of a cylindrical plunger that moves axially in a housing of the base element parallel to the housing of the cylindrical insert, as has been said above, a solid end cap or retainer and a set of ball-bearings working with these elements so that the cam can be pulled by the shaft that is solidly joined to the fixed part, said shaft then detaching from the cylindrical plunger once the slope of the cam has finally been actuated, bringing about the full opening of the mould and making it easy to remove the moulded piece.

### DESCRIPTION OF THE DRAWINGS

To complement this description and in order to aid a better understanding of the invention's characteristics, according to a preferred practical embodiment thereof, there is a set of illustrative and non-limiting drawings integral to said description, which are as follows:

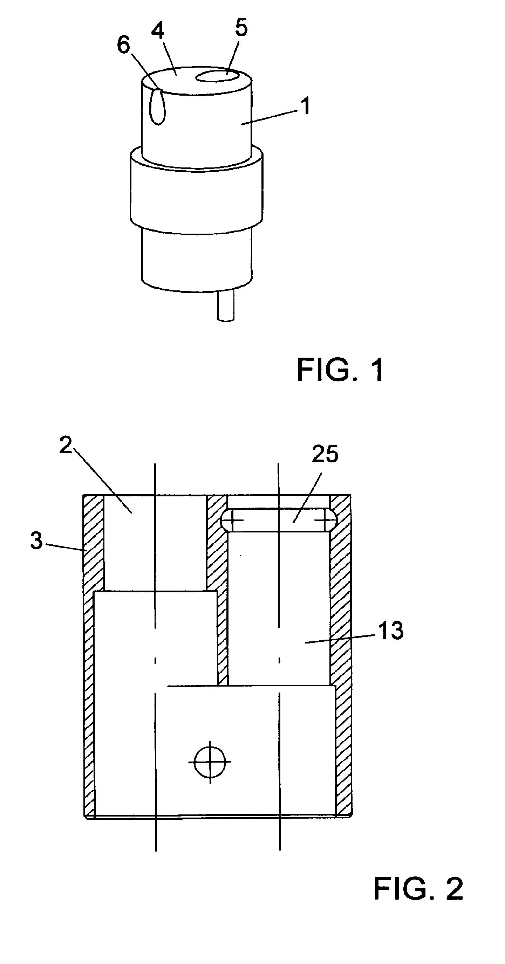

Figure 1.- Shows a perspective view of a detail of the cylindrical insert, together with its support, which constitutes the cutting accessory for injection moulds that is the object of the present invention.
Figure 2.- Shows a cross-sectional side elevation view of the support of the unit shown in the previous figure and the other mechanisms of the accessory.
Figure 3.- Also shows a cross-sectional side elevation view similar to that of figure 2, but showing all the mechanisms of the accessory, with the mould in a closed situation.
Figure 4.- Shows a perspective view of a detail of the cam that forms part of said accessory.
Figure 5.- Also shows a perspective view of the slide that connects the cam of the previous figure with the cutting mechanism of figure 1.
Figure 6.- Shows a similar view to that of figure 3, wherein the mould is in an opened situation.

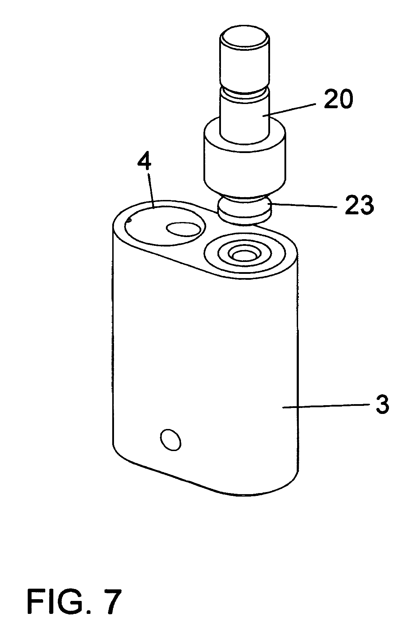

Figure 7.- Finally, shows an overall perspective view of the accessory as a whole.

### PREFERRED EMBODIMENT OF THE INVENTION

In view of the above-described figures it can be observed how the accessory recommended herein is based on the use of a cylindrical insert (1) as a material injection branch, which is established with the possibility of rotating inside a housing (2), which is also cylindrical, in a base element (3) with an overall prismatic-rectangular shape, with semi-cylindrical shorter sides, but that may have any other shape without this affecting the essence of the invention.

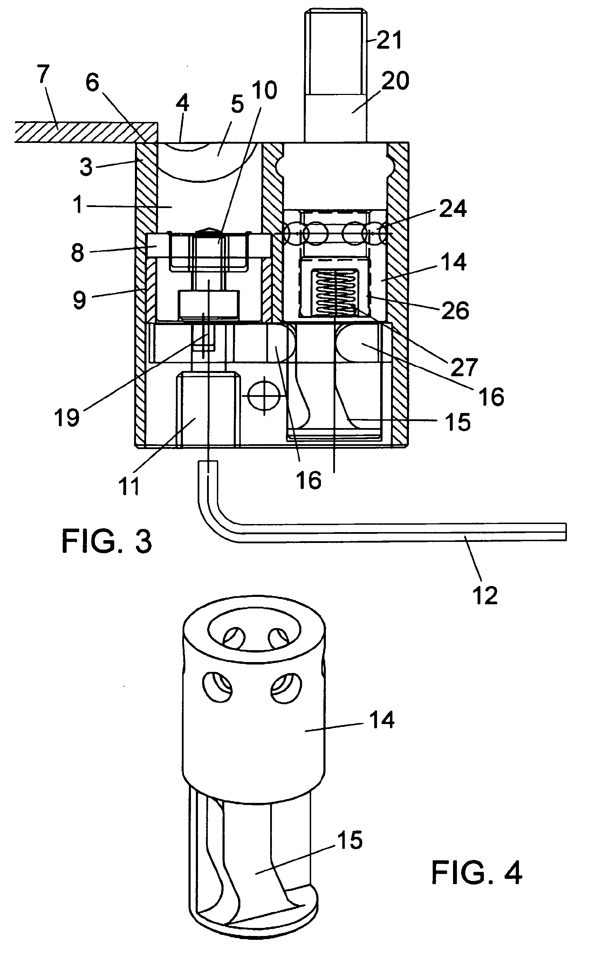

Said cylindrical insert (1), and more specifically the base (4) thereof by which it must be adapted to the corresponding part of the mould, preferably to the moveable part, includes the inlet (5) for the melted plastic material, this inlet having an arched path and a progressively decreasing section that ends in a peripheral area (6) that communicates with the moulding cavity, to which the accessory is fixed by its base element (3), as is shown particularly well in figure 3, in which it can be observed how the cavity (7) of the mould corresponding to the piece to be produced presents its opening for access thereto perfectly flush with the corresponding base (4) of the cylindrical insert (1).

By providing said opening (6) with a sharp edge that converts the cylindrical insert (1) into a blade, and by providing said cylindrical insert (1) with an angular movement, it is possible at the end of the moulding stage to achieve a clean cut of the injection branch, by shearing, in correspondence with the surface plane of the piece (7) being produced, which determines a perfect finish thereof without the need for subsequent or complementary finishing operations.

The cylindrical insert (1) is mounted on the base element (3) with the aid of a support (8) and a friction bearing (9), the insert (1) being fixed to the support (8) by means of a bolt (10) that can be accessed through the hole (11) in the base element (1) that faces the base (4) thereof for its adaptation to the mould, with the aid of a suitable tool, e.g. the Allen key (12) shown in figure 3.

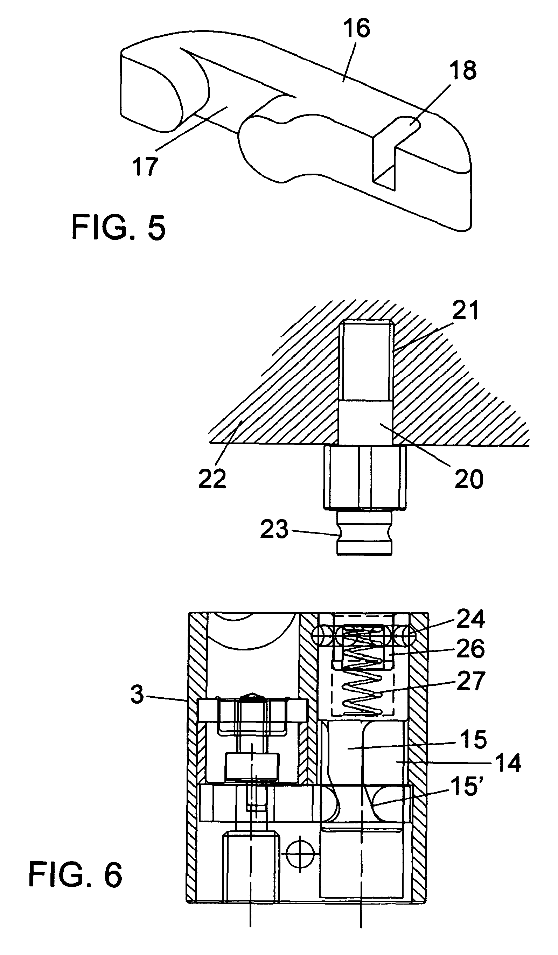

For the angular actuation of the cylindrical insert (1), i.e. the blade (6), a cylindrical plunger (14) is established in a second housing (13) of the base element (3), parallel to the previous housing (2), which is connected to the latter by the area opposite the mould, the bottom end of the cylinder having a cam (15) that is responsible for angularly moving the insert (1), being connected thereto by means of a transversal slide (16) that is shown in detail in figure 5, which has a gap (17) through which the actuator cam (15) passes, having on its opposite side a notch or housing (18) for a pin (19) that is duly keyed to the support (8) of the cylindrical insert (1) in an off-centred position, all such that the axial movement of the cylindrical plunger (14) causes a transversal movement of the slide (16), which in turn results in an angular movement of the cylindrical insert (1), with the consequent cutting effect of the blade (6) on the injection branch.

As has been said above, it is essential for the piece (7) to be cut before it is ejected but after having begun to open the mould, to release the injection branch and enable the removal thereof, for which said cam (15) includes a straight section corresponding with reference (15), in which the cam is inoperative during the initial movement of the plunger (14) at the beginning of the mould-opening manoeuvre, and a second section (15') that is oblique, which brings about the longitudinal movement of the slide (16) on coming into contact with it, resulting in the consequent rotation of the blade.

As has been said before, the axial movement of the cylindrical plunger (14) is automatically carried out during the mould-opening manoeuvre, so that whilst the base element (3) is joined to one of the parts of the mould, specifically the moveable part, a shaft (20), which is the axial prolongation of the cylindrical plunger (14), is solidly joined to the other part of the mould, i.e. to the fixed part, so that during the mould-opening manoeuvre the shaft (20) retracts the cylindrical plunger (14), which in turn moves the cam (15).

To enable the full opening of the mould despite the fact that the accessory is simultaneously joined to the two fixed and moveable parts thereof, it is anticipated that said attachment shaft (20), which is equipped with a threaded end sector (21) whereby it is solidly joined to the fixed part of the mould, referred to as (22) in figure 6, is physically independent from the cylindrical plunger (14), having a peripheral collar or circular groove (23) into which a set of ball-bearings (24) can fit, the latter in turn being able to slide on the inner face of the cylindrical housing (13) as the shaft (20) moves inside said housing or being able to disengage from said circular groove (23) and establish themselves in another circular groove (25) in the housing (13) when the shaft (20) is fully detached from the rest of the accessory, the ball-bearings being established in this situation with the aid of a stop-retainer (26), which also moves inside the cylindrical housing (13) and is driven by a spring (27) that pushes said retainer to the level of the circular groove (25).

## Claims

1. Sprue-cutting accessory for injection moulds, particularly for plastic pieces, wherein the moulding cavity, when closed, receives the plastic injection material through at least one inlet situated in any appropriate part of said cavity, **characterised in that** it includes a rotating mechanism through which the melted plastic material enters the cavity that forms the mould, said mechanism rotating on itself during the mould-opening manoeuvre, bringing about the shearing of the sprue.

2. Sprue-cutting accessory for injection moulds, according to claim 1, **characterised in that** said mechanism takes the form of a cylindrical insert (1), mounted with the freedom to rotate inside a cylindrical housing (2) of a base element (3) that is designed to be attached to the part of the mould in which the material inlet is established, preferably to the moveable part, the base of said cylindrical insert that adapts it to the part of the mould having the inlet (5) for melted plastic material, which enters the moulding cavity through an opening (6) that is also established in said base (4) of the cylindrical insert (1) next to the mould in correspondence with the surface of the latter, it being anticipated that the edge of said opening (6) is sharp, forming a blade that cuts the corresponding injection branch due to angular movement of the cylindrical insert which is supplied thereto by any means before the piece is ejected but after the mould is opened, when said branch has been released.

3. Sprue-cutting accessory for injection moulds, according to the previous claims, **characterised in that** the cylindrical insert (1) is established in the housing (2), which is also cylindrical, of the base element together with a support (8), to which said insert (1) is attached with the aid of a bolt (10), a friction bearing (9) being established between the support (8) and the base element (3) to aid the rotation or angular movement of the cylindrical insert (1) that constitutes the cutting blade.

4. Sprue-cutting accessory for injection moulds, according to the previous claims, **characterised in that** the angular movement of the cylindrical insert (1) automatically occurs during the opening and closing manoeuvres of the mould, for which a second cylindrical housing (13) is established in said base element (3), parallel to the previous housing, in which a cylindrical plunger (14) moves, ending in a cam (15) that acts on a transversal slide (16) during the axial movement of the cylindrical plunger (14), the slide in turn acting inside the cylindrical housing (2) on a off-centred pin (19) that is keyed to the support (8) of the cylindrical insert (1), the pressure on said off-centred pin (19) bringing about an angular movement of the cylindrical insert (1) and the blade (6) defined thereon, said cylindrical plunger being connected to a shaft (20) that is solidly joined to the other part of the mould, preferably to the fixed part.

5. Sprue-cutting accessory for injection moulds, according to claim 4, **characterised in that** the slide (16) has a gap (17) through which the cam (15) passes and a notch (18) in which the off-centred pin (19) is housed, whilst a first straight section (15) is defined on the cam (15) in which said cam is inoperative during a first stage of movement of the cylindrical plunger (14), i.e. in a first stage of opening the mould, and a second sector (15') that is oblique, which brings about the longitudinal movement of the slide (16), causing the angular movement of the cutting blade (6).

6. Sprue-cutting accessory for injection moulds, according to claims 4 and 5, **characterised in that** the shaft (20), which is a prolongation of the cylindrical plunger (14) and which has a threaded end sector (21) for attaching it to the corresponding part of the mould, is physically independent from said cylindrical plunger (14), inside which it can be axially inserted and removed, being connected thereto by a set of a peripheral ball-bearings (24) that can be fitted into a peripheral groove (23) in the shaft (20) in a coupling situation and thanks to which the cylindrical plunger is pulled to a limiting situation that must be passed to achieve the full opening of the mould, which is defined by said ball-bearings (24) fitting into a circular groove (25) in the cylindrical housing (13), a situation in which the shaft (20) is released with the possibility of being fully detached from the rest of the accessory, wherein the ball-bearings are kept stable in the housings of the cylindrical plunger (14) with the aid of a stop-retainer (26), which is projected towards a position in which said ball-bearings are retained by the effect of a spring (27).
